# EUROPÄISCHE PATENTANMELDUNG

(11) **EP 1 479 491 A1**
(43) Veröffentlichungstag der Anmeldung: **24.11.2004**
(21) Anmeldenummer: 04011913.3
(22) Anmeldetag: 19.05.2004
(51) Int. Cl.: B27C 1/08, B23B 31/26

(54) **Hobelmaschine**

(30) Priorität: 20.05.2003 DE 10323105; 23.12.2003 DE 10360939
(71) Anmelder: Otto Martin Maschinenbau GmbH & Co., 87724 Ottobeuren (DE)
(72) Erfinder: Martin, Max Dipl.-Ing., 87724 Ottobeuren (DE)
(74) Vertreter: Pfister, Stefan Helmut Ulrich

(57) **Zusammenfassung**

Die Erfindung betrifft eine Hobelmaschine, insbesondere Vierseitenhobelmaschine, mit mindestens einem Hobelwerkzeug (2) für das Bearbeiten von Werkstücken (III), wobei das Hobelwerkzeug von einem Antrieb angetrieben ist.

Die Erfindung zeichnet sich dadurch aus, daß der Antrieb durch einen Spindelmotor (I) angegeben ist, der als Direktantrieb für das Hobelwerkzeug (2) ausgebildet ist.

## Beschreibung

Die Erfindung betrifft eine Hobelmaschine, insbesondere eine Vierseitenhobelmaschine, mit mindestens einem Hobelwerkzeug für das Bearbeiten von Werkstücken, wobei das Hobelwerkzeug von mindestens einem Antrieb angetrieben ist.

Derartige Hobelmaschinen bzw. Hobelautomaten sind bekannt. Bei Hobelautomaten, insbesondere sogenannten Vierseitern, sind bislang Hobelaggregate bekannt, bei welchen die Hobelwelle über einen Riementrieb angetrieben wird. Dabei treibt die Motorwelle eine erste Riemenscheibe an und der Riemen überträgt das Drehmoment auf die Werkzeugwelle. Auf der Werkzeugwelle ist dann das Hobelwerkzeug angeordnet.

Diese Vorgehensweise ist im Hinblick auf das Erreichen hoher Drehzahlen recht günstig, da die Drehzahlen durch entsprechende Auswahl des Übersetzungsverhältnisses des Riementriebes einstellbar ist. Nachteilig bei derartigen Maschinen ist, daß die Laufruhe unter Umständen sehr eingeschränkt ist. Dies wird insbesondere verursacht durch den Einsatzbereich der Hobelmaschinen bzw. Hobelautomaten im rauen Hobelbetrieb. Dabei können sich Holz, Staub bzw. kleinere Holzspäne auf den Riemen festsetzen. Mit Hilfe der Riemen werden dann der Holzstaub bzw. die Holzspäne auf die Antriebsscheibe des Riementriebs transportiert. Dadurch erhält die Antriebsscheibe eine merkbare Unwucht, weil nämlich der Holzstaub bzw. die Späne auf der Antriebsscheibe des Werkzeuges festklebt. Diese Unwucht führt dann zu einer reduzierten Laufruhe bzw. zu Schwingungen des gesamten Antriebes. Diese Schwingungen werden über das Werkzeug auf die Werkstückoberfläche übertragen, was ebenfalls zu Problemen in der Maßgenauigkeit führen kann. Die vorgenannten Probleme werden insbesondere dann auffällig, wenn mit den Werkzeugen verhältnismäßig große Drehzahlen erreicht werden sollen. Hierbei sind Drehzahlen von beispielsweise 6.000 bis 12.000 Umdrehungen bekannt bzw. geplant.

Aus dem Stand der Technik ist auch eine Lösung bekannt, die zur Bearbeitung von Holzwerkstücken dient und die im Wesentlichen dazu dient anzuzeigen, wann sich das Werkzeug noch dreht. Dazu ist eine Drehdetektionseinrichtung und ein Betätigungselement sowie ein Sensor vorgesehen, die über eine Warnlampe beispielsweise anzeigen, wann sich die Spindel noch dreht. Diese Lösung dient daher insbesondere zur Erfüllung sicherheitstechnischer Anforderungen, wenn beispielsweise der Antrieb mit einer Absaugvorrichtung für die bei der Bearbeitung entstehenden Späne ausgestattet ist, welcher abnehmbar ist. Um Verletzungen der Bedienungsperson zu vermeiden, wenn die Abdeckung der Absaugvorrichtung werkzeugseitig für Wartungsarbeiten entfernt werden muß, ist eine derartige Sicherungseinrichtung gedacht. Die aus dem Stand der Technik bekannte Bearbeitungsmaschine ist weiterhin dadurch gekennzeichnet, daß sich das Werkstück während der Bearbeitung nicht bewegt. Vielmehr werden dazu mehrere Spindeln über dem Werkstück positioniert und dann zur Bearbeitungs jeweils an der vorgesehenen Stelle abgesenkt. Ein automatischer Werkstückdurchlauf durch die Maschine ist demnach nicht vorgesehen.

Aus dem Stand der Technik ist weiterhin eine CNC-gesteuerte Holzbearbeitungsanlage, insbesondere für lange Werkstücke wie Balken bekannt. Dabei handelt es sich um eine CNC-gesteuerte Holzbearbeitungsanlage, wie beispielsweise eine Abbundanlage. Das Werkzeug ist dabei mit einem Futter am Spindelmotor befestigt und der Spindelmotor befindet sich an einem Portal, welches über das Werkstück bewegt wird. Das Werkzeug wird zur Bearbeitung an der jeweils vorgesehenen Stelle dann zur Bearbeitung ebenfalls abgesenkt. Zur flächigen Bearbeitung des Werkstückes über die gesamte Länge ist demnach die hieraus bekannte Holzbearbeitungsanlage nicht geeignet.

Lösungen, die der Verbesserung der Laufruhe von Hobelmaschinen, bei insbesondere von mehrseitig das Werkstück bearbeitenden Hobelmaschinen, dienen, sind aus den beiden zuvor genannten Druckschriften nicht zu entnehmen.

Ausgehend von dem zuvor beschriebenen Stand der Technik ist es Aufgabe der Erfindung, eine Hobelmaschine zur Verfügung zu stellen, die die Laufruhe des Werkzeugantriebes verbessert.

Die Erfindung geht von dem beschriebenen Stand der Technik aus und schlägt zur Lösung der gestellten Aufgabe eine Hobelmaschine, insbesondere Vierseitenhobelmaschine vor, mit mindestens einem Hobelwerkzeug für das Bearbeiten von Werkstücken, wobei das Hobelwerkzeug von einem Antrieb angetrieben ist, welche sich dadurch auszeichnet, daß der Antrieb durch einen Spindelmotor angegeben ist, der als Direktantrieb für das Hobelwerkzeug ausgebildet ist. Durch die Ausführung der erfindungsgemäßen Hobelmaschine mit einem Spindelantrieb als Direktantrieb werden gleichzeitig mehrere Vorteile erreicht. Zum einen wird die durch die Erfindung gestellte Aufgabe gelöst, die Laufruhe des Werkzeugantriebes zu verbessern. Es ist jetzt absolut vermieden, daß sich Staub bzw. Späne auf den Werkzeugantrieb selbst setzen können und zu der beschriebenen Unwucht führen. Die ungewollten Schwingungen des Werkzeuges werden dadurch ebenfalls beseitigt. Im weiteren wird aber die gesamte Konstruktion einer derartigen Hobelmaschine wesentlich vereinfacht. Während bei dem Stand der Technik für jeden Werkzeugantrieb neben dem Antriebsmotor auch noch ein Riementrieb bzw. -getriebe notwendig war, wird dies durch die Ausbildung mit einem Spindelmotor, der als Direktantrieb ausgebildet ist, dadurch vermieden, daß das Werkstück direkt auf der Welle des Spindelmotors angeordnet ist. Damit werden die nach dem Stand der Technik bekannten negativen Auswirkungen auf den Werkzeugantrieb insgesamt vermieden. Eine nicht unerhebliche Platzeinsparung ist ebenfalls durch die zuvor beschriebene Hobelmaschine erreichbar.

Eine vorteilhafte Weiterbildung der erfindungsgemäßen Hobelmaschine zeichnet sich demnach dadurch aus, daß das Hobelwerkzeug direkt auf der Welle des Spindelmotors angeordnet ist.

Eine Weiterbildung der Erfindung zeichnet sich dadurch aus, daß zwischen der Motorwelle des Spindelmotors und der das Hobelwerkzeug tragenden Welle eben kein Getriebe vorgesehen ist, um die Laufruhe der Hobelmaschine insgesamt zu erhöhen.

Ein weiterer Aspekt der Erfindung ist dadurch angegeben, daß wenigstens eine Achse des Spindelmotors höhenverstellbar, seitenverstellbar, und/oder winklig verstellbar, schwenkbar ausgebildet an der Hobelmaschine angeordnet ist. Dadurch wird erreicht, daß unterschiedliche Fertigungsmaße für das zu bearbeitende Werkstück sowohl in der Höhe als auch in der Breite gegebenenfalls voneinander unabhängig beziehungsweise jeweils einzeln eingestellt werden können. Bevorzugt ist es auch, wenn beispielsweise wenigstens eine Achse des Spindelmotors schwenkbar ausgebildet ist. Damit lassen sich unterschiedliche Winkellagen des zu bearbeitenden Werkstückes einstellen.

Nach einer Weiterbildung der erfindungsgemäßen Lösung führt das Werkstück zur Bearbeitung eine Relativbewegung gegenüber dem Hobelwerkzeug durch. Die Relativbewegung für die Bearbeitung des Werkstückes wird demnach ausschließlich von dem Werkstück zur Verfügung gestellt und nicht durch einen Antrieb der Spindelwerkzeuge in Richtung des zu bearbeitenden Werkstückes beziehungsweise durch einen Antrieb der die Spindel oder die Spindeln tragenden Maschinenteile, wie beispielsweise bei den aus dem Stand der Technik bekannten Bearbeitungsanlagen in Portalbauweise. Hier ist/sind die Spindel beziehungsweise die Spindeln an einem Portal angeordnet sind, welches sich zur Bearbeitung über das Werkstück bewegt. In gleicher Weise ist es bei Werkzeugmaschinen bekannt, die Spindeln beziehungsweise die Werkzeuge neben der für die Bearbeitung erforderlichen Drehbewegung auch gleichzeitig in Bearbeitungsrichtung für das Werkstück bewegt. Dies wird nach der vorgeschlagenen Ausführungsform der Erfindung komplett vermieden, da die Relativbewegung gegenüber dem Hobelwerkzeug jetzt durch das Werkstück selbst beziehungsweise durch einen das Werkstück antreibenden Antrieb zur Verfügung gestellt wird. Erfindungsgemäß sind auch Hobelmaschinen umfaßt, bei welchen Drehzahl und Andruck der Werkzeuge an das Werkstück so anpassbar sind, daß das Werkstück durch die Bearbeitungswerkzeuge bewegt wird, ohne die Spindel oder das Werkzeug relativ zum Werkstück zu bewegen.

Von Vorteil ist es weiter, wenn für die Relativbewegung des Werkstückes eine Vorschubeinrichtung vorgesehen ist, die Vorschubeinrichtung dient dabei dem kontinuierlichen Bewegen des Werkstückes, so daß durch die Bearbeitungswerkzeuge beziehungsweise durch die Spindeln tatsächlich nur eine Drehbewegung für das Werkzeug zur Verfügung gestellt werden muß. Auf diese Art und Weise wird dabei eine sehr glatte Oberfläche erhalten. In gleicher Weise wird vermieden, daß bestimmte Schwingungen durch die Relativbewegung auf die Spindel übertragen werden, was zu den eingangs erwähnten unschönen Oberflächen führen würde. Insofern ist die zuvor beschriebene Ausführungsform auch dazu geeignet, die Oberflächenqualität insgesamt weiter zu verbessern.

Entsprechend einer vorteilhaften Weiterbildung der Erfindung ist es vorgesehen, daß das Werkstück auf einem Auflagetisch aufliegt. Selbstverständlich ist es nach der Erfindung auch möglich, als Auflage für das Werkstück Gleitschienen vorzusehen und das Werkstück mittels einer Vorschubeinrichtung zu spannen und gleichzeitig zu fördern.

Die Vorschubeinrichtung kann dabei erfindungsgemäß durch eine antreibbare Rollenbahn, beziehungsweise einen Gurt-, Riemenoder ein Förderband angegeben sein, auf der das Werkstück aufliegt und/oder auf die das Werkstück mittels einer Andruckkraft gedrückt wird.

Von besonderen Vorteil ist es dabei, wenn der Auflagetisch, die Rollenbahn beziehungsweise die Gleitschienen oder Gurtriemen und Förderbänder höhenverstellbar ausgebildet sind. Damit läßt sich die Auflage für das Werkstück entsprechend variieren und man erhält damit eine sehr unversell einsetzbare Hobelmaschine für unterschiedliche Werkstückhöhen.

Von Vorteil ist es auch, wenn eine Verstelleinrichtung zur Einstellung des Winkels des Auflagetisches, der Rollenbahn, der Gleitschienen oder der Gurt-, Riemen- oder Förderbänder vorgesehen ist. Damit lassen sich unterschiedlichste Winkeleinstellungen des Werkstückes für die Bearbeitung einstellen, ohne daß beispielsweise die Spindel selbst winkeleinstellbar ausgestaltet sein muß.

Selbstverständlich ist es erfindungsgemäß auch vorgesehen, mehrere, vorzugsweise in unterschiedlichen Winkelstellungen zum Werkstück anordenbare Spindelmotoren vorzusehen, an welchen das Werkstück zur Bearbeitung vorbeitransportiert wird. Kombiniert man die beiden zuvor beschriebenen Lösungsvarianten zu einer neuen Variante, nämlich derart, daß sowohl die Spindeleinstellungen als auch die Auflage jeweils auf einen bestimmten Winkel einstellbar ist, so kann man auch hier vorteilhafterweise unterschiedlichste Bearbeitungswünsche bezüglich des einzustellenden Winkels realisieren.

Eine Weiterbildung der Erfindung zeichnet sich dadurch aus, daß die Hobelmaschine als sogenannter Durchläufer beziehungsweise als Durchlaufmaschine ausgebildet ist. Derartige Durchläufer oder Durchlaufmaschinen zeichnen sich dadurch aus, daß das Werkstück bezüglich der Bearbeitungswerkzeuge bewegt wird und die Bearbeitungswerkzeuge selbst keine Relativbewegung gegenüber dem Werkstück ausführen, sondern lediglich die zur Bearbeitung notwendige Drehbewegung. Dabei können die Werkstücke beispielsweise durch eine Vorschubeinrichtung durch die Maschine transportiert werden. In gleicher Weise ist es jedoch auch möglich, die Bearbeitungswerkzeuge so einzustellen, daß durch die Drehbewegung der Werkzeugantriebe selbst gleichzeitig noch eine Relativbewegung des Werkstückes bewirkt wird. Auch diese Art von Maschinen werden im Sinne der Erfindung als sogenannte Durchlaufmaschinen definiert.

Erfindungsgemäß wurde auch gefunden, daß es von Vorteil ist, wenn das Hobelwerkzeug auf einem fest mit der Welle verbundenen Werkzeugdorn aufgesetzt ist. Dieser Werkzeugdorn ist im wesentlichen eine Verlängerung der Welle des Spindelantriebes. Er ist lediglich mit entsprechenden Befestigungsmitteln für das Hobelwerkzeug zu versehen und kann dabei eine sehr einfache Ausgestaltung der Erfindung darstellen. Gleichwohl ist es auch bei dieser einfachen Ausführung bereits möglich, unterschiedliche Hobelwerkzeuge mit unterschiedlichen Aussendurchmessern bzw. mit unterschiedlich bestückten Schneidwerkzeugen aufzusezten, wenn die Bohrung des Hobelwerkzeuges mit dem Durchmesser des Werkzeugdornes übereinstimmt.

Gemäß einer vorteilhaften Weiterbildung der erfindungsgemäßen Hobelmaschine ist es vorgesehen, daß der Werkzeugdorn für das Hobelwerkzeug direkt an die Welle des Spindelmotors lösbar fest, insbesondere wechselbar, anschließbar bzw. anflanschbar ausgebildet ist. Hierdurch wird erreicht, daß unterschiedliche Abmessungen für das Hobelwerkzeug, beispielsweise für die Bearbeitungsbreite, durch unterschiedliche Werkzeugdorne, beeinflußbar sind, derart, daß immer dann der entsprechende Werkzeugdorn für das jeweilige Hobelwerkzeug eingesetzt wird. Bevorzugt ist es dabei, wenn die Hobelwerkzeuge mit einem entsprechenden Werkzeugdorn gleich versehen und bevorratet an der Hobelmaschine abgelegt werden. Von Vorteil ist es auch, wenn eine Spannmutter vorgesehen ist, die das Hobelwerkzeug auf dem Werkzeugdorn spannt und/oder zentriert. Die Spannung ist vorteilhafterweise gleichzeitig mit einer Zentrierung verbunden, dies lässt sich beispielsweise durch konische Anfasungen an der Mutter oder durch eine passgenaue Ausführung der Bohrung des Hobelwerkzeuges in Bezug auf den werkzeugdorn erreichen.

Es ist weiterhin bevorzugt, wenn das Hobelwerkzeug mit einem integrierten, vorzugsweise wechselbaren Werkzeugdorn versehen ist. Wie bereits erwähnt, lässt sich dadurch ein günstigerer Werkzeugwechsel erreichen, in dem bestimmte Hobelbreiten mit entsprechenden Dornen jeweils vorgehalten werden, die dann nur noch ein Wechseln des Hobelwerkzeuges von dem Werkzeugdorn erfordert, wenn beispielsweise das Hobelwerkzeug verschlissen ist.

Eine vorteilhafte Weiterbildung der erfindungsgemäßen Hobelmaschine sieht vor, daß wenigstens eine Schnittstelle an der Welle des Spindelmotors und am Werkzeugdorn vorgesehen ist, mittels derer der Anschluß des Werkzeugdorns an die Welle des Spindelmotors erfolgt.

Von Vorteil ist es dabei, wenn als Schnittstelle ein Spannkonus vorgesehen ist.

Als Schnittstelle kann erfindungsgemäß auch ein Flansch mit dazu korrespondierenden Aufnahmen dienen.

Eine weitere Variante der Erfindung ist gekennzeichnet durch eine Schnittstelle in Form einer Bohrung in der Welle mit integrierten Feststellelementen, in die ein mit Feststellelementen zusammenwirkender Zapfen eingreift.

Von Vorteil ist es dabei weiter, wenn der Zapfen an einem das Werkzeug tragenden Wellenstumpf beziehungsweise am Werkzeug selbst angeordnet ist.

Nach einer Variante der Erfindung ist die Schnittstelle zur Befestigung des Werkzeuges beziehungsweise eines das Werkzeug tragenden Wellenstumpfes nicht auf die Ausführungsform mit einem Spindelmotor als Direktantrieb eingeschränkt, sondern auch bei Hobelmaschinen zu verwenden, die einen Spindelmotor als Antrieb nutzen, bei dem aber ein Getriebe direkt auf die Welle des Spindelmotores aufgesetzt werden kann, an das andererseits dann das Werkzeug beziehungsweise eine das Werkzeug tragende Welle oder ein Wellenstumpf angeschlossen werden kann.

Demnach ist es von Vorteil, wenn erfindungsgemäß nach einer weiteren Variante die Schnittstelle an der Welle des Spindelmotors zum Anschluß eines Getriebes dient, welches gleichzeitig neben der Schnittstelle zum Anschluß des Getriebes eine weitere Schnittstelle zum Anschluß des Werkzeugdornes beziehungsweise des das Werkzeug tragenden Wellenstumpfes aufweist.

Die Schnittstelle betrifft auch eine von einem Antrieb angetriebene Spindel, die auf einem Getriebe aufgesetzt ist und an die das Werkzeug beziehungsweise ein werkzeugtragender Dorn anschließbar ist. Das Werkzeug bzw. der ein Werkzeug tragender Dorn kann selbstverständlich auch direkt auf die Welle des Getriebes mittels der vorbeschriebenen Schnittstelle angeschlossen werden. Die Verbindungsvarianten des Werkzeugs mit dem Spindelmotor gelten insofern auch für diese Maschinenausführungen.

Gemäß eines weiteren Aspekts der erfindungsgemäßen Hobelmaschine ist es vorgesehen, daß am Werkzeugdorn ein Flansch und an der Welle des Spindelmotors beziehungsweise an der Welle des Getriebes dazu korrespondierende Aufnahmen vorgesehen sind, in die der Flansch auf- bzw. einsetzbar ist und im Falle des Anschlußes des Werkzeugdorns an die Welle in den Aufnahmen befindlichen Kugeln mittels einer Spannstange in Ringnut des Flansches gedrückt werden, wodurch der Flansch gespreizt und damit der Werkzeugdorn fixiert wird. Dies stellt eine Lösung dar, die weitestgehend bereits automatisierbar gestaltet werden kann, nämlich dadurch, daß der Werkzeugdorn mit dem Flansch an die Welle angesetzt wird und dann die Spannstange vorzugsweise maschinell gespannt wird, wodurch die Kugeln in die Ringnut des Flansches gedrückt werden. Selbstverständlich ist auch eine manuelle Befestigungsweise durch manuelles Betätigen der Spannstange vorgesehen.

In gleicher Weise wie zuvor beschrieben ist es erfindungsgemäß vorgesehen, daß der Flansch an der Welle des Spindelmotors angeordnet ist und dazu korrespondierend dann die Aufnahmen an dem Werkzeugdorn vorgesehen sind.

Entsprechend einer vorteilhaften Weiterbildung zeichnet sich die Hobelmaschine dadurch aus, daß die Spannstange in der Welle des Spindelmotors angeordnet ist. Dabei ist erfindungsgemäß im Umkehrschuß auch vorgesehen, daß die Spannstange in dem Werkzeugdorn angeordnet ist.

Eine vorteilhafte Weiterbildung der Erfindung sieht vor, daß die Spannstange auf der zu den Kugeln weisenden Seite konisch, insbesondere mit zuerst steilem und dann flacher verlaufendem Konuswinkel ausgebildet ist. Durch diese besondere Art der Ausbildung der Spannstange wird ein besonders sicheres und schnelles Fixieren des Werkzeugdorns an der Welle des Spindelmotors erreicht. Die Kugeln werden zunächst durch den steiler verlaufenden Konuswinkel recht schnell in die Ringnut des Flansches gedrückt, um dann durch den etwas steiler verlaufenden Konuswinkel fixiert und geklemmt zu werden.

Erfindungsgemäß ist es jedoch auch vorgesehen, daß die Spannstange auf der zu den Kugeln weisenden Seite flach und auf der dazu gegenüberliegenden Seite kegelförmig, vorzugsweise kegelstirnförmig ausgebildet ist. Die zuvor beschriebenen Ausführungsformen der Spannstangen sind dabei keineswegs eingeschränkt zu verstehen, sondern stellen lediglich vorteilhafte Weiterbildungen der Erfindung dar, andere gleichwertige bzw. äquivalente Lösungen sind ebenfalls erfindungsgemäß hier einsetzbar.

Die Erfindung sieht auch vor, daß der Flansch an der Welle und die Aufnahme an dem Werkzeugdorn angeordnet ist.

Bevorzugt ist es weiterhin, wenn der Werkzeugdorn mittels mindestens einer Zentriereinrichtung auf der Welle des Spindelmotors ausgerichtet, insbesondere zentrisch genau ausgerichtet, wird. Eine Zentriereinrichtung erleichtert die Ausrichtung des Werkzeugdornes im Bezug auf die Welle und kann das ganze entweder automatisiert gestalten bzw. händisch einfach realisieren.

Ein weiterer Aspekt der Erfindung ist dadurch angegeben, daß wenigstens ein Zentrierring vorgesehen ist, der zylindrisch und/oder konisch ausgebildet ist. Ein solcher Zentrierring kann sowohl zylindrisch aber auch konisch ausgebildet sein, bevorzugt ist es dabei, wenn dieser Zentrierring konisch ausgebildet ist, da hier ein besseres und klemmfreies Verbinden und Zentrieren des Werkzeugdornes auf der Welle des Spindelmotors ermöglicht ist.

Eine bevorzugte Variante der erfindungsgemäßen Hobelmaschine sieht vor, daß der Zentrierring an der Außenseite zylindrisch und an der Innenseite konisch ausgebildet ist.

Dabei ist es entsprechend einer vorteilhaften Variante der Erfindung vorgesehen, daß der Flansch am Werkzeugdorn konisch ausgebildet ist und in der Aufnahme der Welle ein mit gleichem Innenkonus versehener, federgelagerter Zentrierring vorgesehen ist, der von einem Anschluß seitlich angeordneten Haltering gehalten ist. Diese Ausführungsform erleichtert in besonderer Weise das Anflanschen des Werkzeugdornes an der Welle.

Die Fixierung erfolgt dann beispielsweise mittels einer Spannschraube, welche entsprechend einer vorteilhaften Weiterbildung der Erfindung den Werkzeugdorn mit der Welle lösbar fest verbindet. Die Zentrierung erfolgt dabei durch den Konus des Flansches mittels des Zentrierringes und die Spannung erfolgt dann mittels der Spannschraube, so daß eine exakte axiale Ausrichtung des Werkzeugdornes an- bzw. auf der Welle erfolgen kann. Selbstverständlich ist es in gleicher Weise möglich, ein Hobelwerkzeug entsprechend auszubilden, daß beispielsweise ein Werkzeugdornzapfen oder ähnliches an diesem ausgebildet ist, der ebenfalls das Verbinden mit der Welle des Spindelmotors in einer der zuvor beschriebenen Ausführungsarten ermöglicht.

Erfindungsgemäß ist es auch vorgesehen, daß wenigstens ein Spannring zum Spannen des Werkzeugdorns auf der Welle des Spindelmotors vorgesehen ist. Der Spannring wird auf die Welle auf der zum Werkzeugdorn weisenden Seite aufgesetzt und weist innen die Aufnahme für den Flansch auf. Eine umgekehrte Ausführung derart, daß der Spannring auf den Werkzeugdorn aufgesetzt ist, ist selbstverständlich auch vorgesehen. Von Vorteil ist es auch, wenn der Spannring von Federringen oder dergleichen gehalten ist. Diese greifen in dafür korrespondierenden Spannnuten ein, um den Spannring auf der Welle bzw. dem Werkzeugdorn zu fixieren.

Die plangleiche Anordnung des Werkzeugdornes an bzw. auf der Welle wird entsprechend einer Weiterbildung derart erreicht, daß Planflächen beziehungsweise Anlagenflächen am Werkzeugdorn und an Werkzeugwelle vorgesehen sind, mittels derer die korrekte axiale Lage des Werkzeugdorns und/oder des Hobelwerkzeuges eingestellt wird. Wie zuvor beschrieben könnnen diese Planflächen selbstverständlich in gleicher Weise auch an dem Hobelwerkzeug vorgesehen werden, wenn kein spezieller Werkzeugdorn bei der jeweils gewählten Ausführungsform vorgesehen ist.

Für die genaue axiale Ausrichtung zwischen Werkzeugdorn und Hobelwerkzeug ist es vorgesehen, daß Anlageflächen an dem Werkzeugdorn und an dem Hobelwerkzeug vorgesehen sind.

Die Erfindung wird nachfolgend anhand von Ausführungsbeispielen und Zeichnungen weiter beschrieben.

Es zeigen:
- Fig. 1: Ausführungsform einer Hobelmaschine nach der Erfindung,
- Fig. 2: unterschiedliche Antriebe im Vergleich zum Stand der Technik,
- Fig. 3: Spindelmotor mit fest angeordnetem Werkzeugdorn nach der Erfindung,
- Fig. 4a und 4b: Ausführungsform mit lösbarem Werkzeugdorn nach der Erfindung,
- Fig. 5a bis 7b: weitere Ausführungsformen lösbarer Verbindungen zwischen Welle und Werkzeugdorn nach der Erfindung.

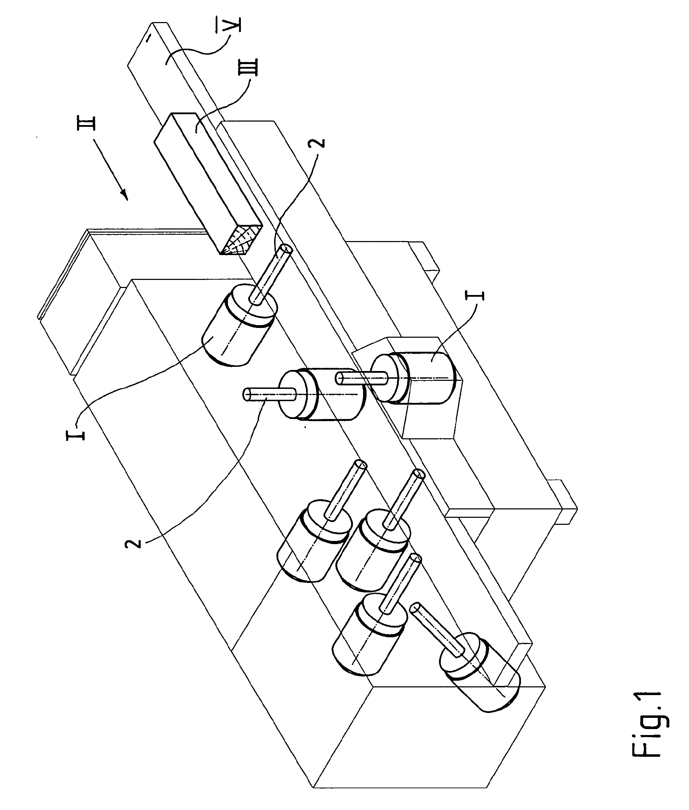

Die Fig. 1 zeigt eine Ausführungsform einer Hobelmaschine nach der Erfindung. Dabei ist die Hobelmaschine selbst mit dem Bezugszeichen II bezeichnet. Auf der Hobelmaschine II ist ein Werkstück III angeordnet. Sehr gut dargestellt sind hierbei die Spindelmotoren I, welche sich entlang der Bearbeitungsbahn bzw. des Bearbeitungstisches der Hobelmaschine II befinden. Die Spindelmotoren tragen Hobelwerkzeuge 2, welche direkt an dem Spindelmotor I angeordnet sind. Bereits aus dieser Darstellung ist ersichtlich, daß für die Ausführung nach der Erfindung mittels einem als Direktantrieb ausgebildeten Spindelmotor erhebliche Platzeinsparungen erzielt werden können. Die Anordnung der Spindelmotoren I selbst ist dabei entsprechend der jeweiligen Bearbeitungswünsche universell gestaltbar. Mittels der so ausgebildeten Hobelmaschine II lassen sich alle vier Seiten des Werkstückes III leicht bearbeiten. Alle Spindelmotoren I sind derart ausgebildet, daß sie mindestens auf einer Achse bewegbar angeordnet sind, um die gewünschten Maße für das Werkstück III einstellen zu können. Der in Bearbeitungsrichtung letzte Spindelmotor I ist dabei schwenkbar als so genannte Uniwelle ausgebildet. Mittels dieser Anordnung läßt sich dann eine winklige Bearbeitung des Werkstückes III durchführen. Der Bearbeitungstisch, auf welchem das Werkstück III aufliegt, ist mit dem Bezugszeichen V bezeichnet.

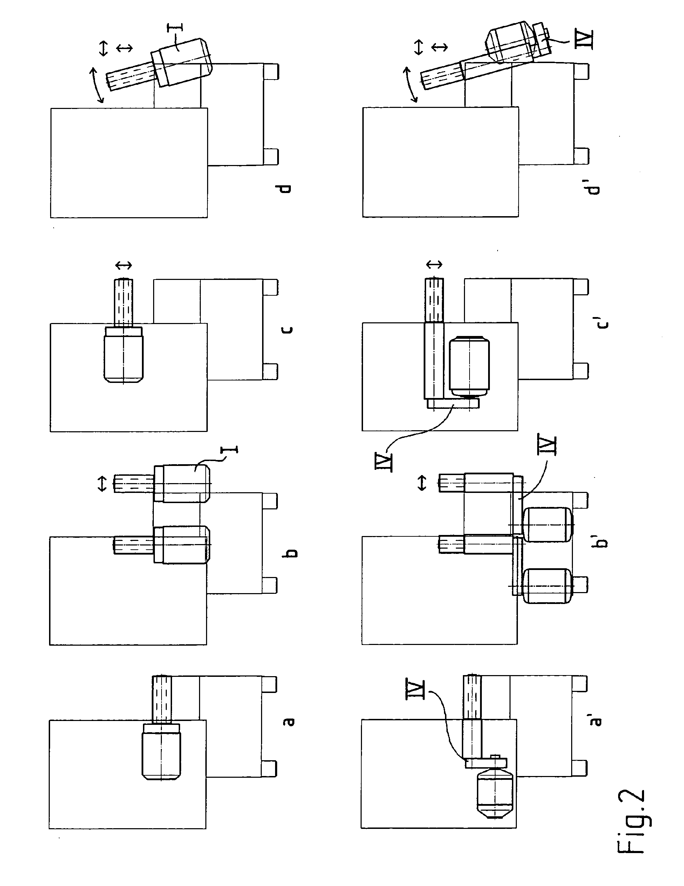

In der Fig. 2 sind unterschiedliche Antriebe für Hobelwerkzeuge dargestellt. Die in der oberen Reihe mit den Buchstaben a bis d bezeichneten Ausführungsformen betreffen dabei Hobelmaschinen nach der Erfindung, welche mit einem Antrieb versehen sind, der durch einen Spindelmotor I angegeben ist und der als Direktantrieb für das Hobelwerkzeug ausgebildet ist. In der darunter befindlichen Variante sind Ausführungsformen mit a' bis d' bezeichnet, die nach dem Stand der Technik ausgebildet sind. Klar wird anhand dieser Gegenüberstellungen, daß speziell die Ausführung nach dem Stand der Technik einen erheblichen höheren konstruktiven Aufwand bedeutet, als dies jetzt nach der Erfindung notwendig ist. Mit dem Bezugszeichen IV sind hierbei die Riementriebe IV bezeichnet, die beim Stand der Technik die Werkzeugwelle antreiben. Neben dem erheblich höheren konstruktiven Aufwand steht beim Stand der Technik noch das Problem, daß die Riementriebe durch Staub verschmutzen und so die Antriebswelle für das Hobelwerkzeug eine merkbare Unwucht bekommt, wenn sich auf der Welle bzw. auf der Antriebsscheibe für die Hobelwelle Staub absetzt. Neben der erheblichen, unerwünschten Geräuschentwicklung ist es dadurch außerdem möglich, daß die Antriebswellen für das Hobelwerkzeug in ungewollte Schwingungen versetzt werden, wodurch ebenfalls gewissen Ungenauigkeiten von dem Hobelwerkzeug auf das zu bearbeitende Werkstück dahin übertragen werden. Dadurch können gegebenenfalls die Oberflächen des Werkstückes nicht in dem eigentlich gewünschten Maß geglättet werden. Häufige Wartungs-arbeiten sind daher die Folge, um diese Stäube und damit die Unwucht auf den Antriebsscheiben zu beseitigen.

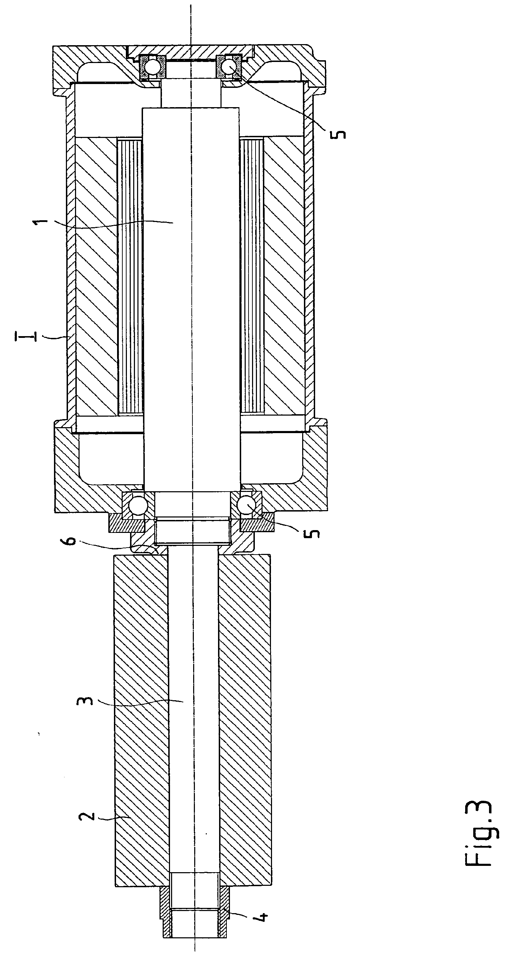

Die Fig. 3 zeigt eine Ausführungsform der Erfindung, bei der der Spindelmotor I bzw. die Welle 1 des Spindelmotors I einen fest angeordneten Werkzeugdorn 3 aufweist, der beispielsweise das Hobelwerkzeug 2 trägt. Das Hobelwerkzeug 2 wird dabei in bezug zum Werkzeugdorn 3 derart ausgeführt, daß die Bohrung des Hobelwerkzeuges passgenau zu dem Werkzeugdorn 3 ausgeführt ist. An der zu dem Spindelmotor I zugewandten Seite des Werkzeugdornes 3 sind Planflächen 6 vorgesehen, an die das Hobelwerkzeug 2 angelegt wird und wodurch eine exakte axiale Ausrichtung ebenfalls ermöglicht ist. Das Hobelwerkzeug 2 wird nach dem Aufsetzen auf dem Werkzeugdorn 3 mittels einer Spannmutter 4 festgespannt. Mit dem Bezugszeichen 5 sind die Lager des Spindelmotors bezeichnet, die die Welle drehbar in dem Spindelmotor I lagern.

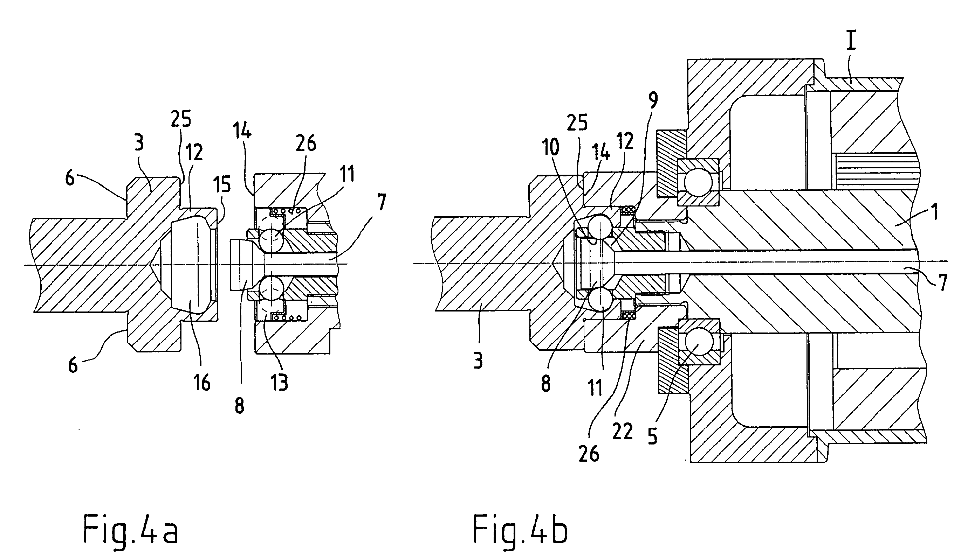

Die Figuren 4a und 4b zeigen eine Ausführungsform eines Antriebes für eine Hobelmaschine nach der Erfindung, wobei hier der Werkzeugdorn 3 von der Welle 1 des Spindelmotors I lösbar ist. Fig. 4a zeigt dabei die gelöste Stellung und die Fig. 4b die verbundene Stellung. An der Welle 1 des Spindelmotors I ist dabei eine Aufnahme 13 vorgesehen, in welcher sich eine Spannstange 7 befindet, die auf ihrer zum Spanndorn hinweisenden Seite konisch erweitert ist. Der Konus ist mit dem Bezugszeichen 8 bezeichnet. Dabei ist der Konuswinkel derart, daß er ausgehend von der Spannstange 7 zunächst steil in Richtung des Werkzeugdornes verläuft und dann etwas abgeflachter.

Neben dem Konus 8 sind Kugeln 11 ebenfalls in den Aufnahmen 13 angeordnet, die dann, wenn der Flansch 12 des Werkzeugdornes 3 in die Aufnahme 13 eingeführt ist, durch Spannen der Spannstange nach außen gedrückt werden und die dann in den Ringkanal oder die Ringnut 16 des Flansches 12 des Werkzeugdornes 3 gedrückt werden. Gleichzeitig wird der Werkzeugdorn durch den als Zentriereinrichtung wirkenden Flansch 12 und Ausnehmung 13 zentriert.

An der Welle 1 und an dem Werkzeugdorn 3 sind Planflächen 14 und 25 vorgesehen, die der Ausrichtung des Werkzeugdornes 3 beim Verbinden mit der Welle 1 dienen. Die Fig. 4b zeigt die verbundene Stellung, aus der ersichtlich ist, daß durch Spannen der Spannstange 7 die Kugeln 11 in die Ringnut 16 des Flansches 12 gedrückt wurden. Durch die Spannstange 7 wird dadurch sowohl der Flansch 12 des Werkzeugdornes 3 in Richtung auf die Welle 1 gezogen und gleichzeitig durch das nach außen drücken der Kugeln 11 geklemmt. Damit ist eine lösbare, aber feste Verbindung zwischen der Welle 1 und dem Werkzeugdorn 3 hergestellt, die insbesondere auch ein maschinelles Spannen des Werkzeugdornes 3 auf die Welle 1 ermöglicht. Mit dem Bezugszeichen 6 sind die Anlageflächen, an welche das hier nicht dargestellte Werkzeug 2 angesetzt wird.

Um zu vermeiden, daß die Kugeln 11 in der gelösten Stellung herausfallen, ist ein Kugelkäfig 26 am vorderen Ende der Welle 1 vorgesehen. Der Kugelkäfig bewirkt, daß die Kugeln 11 in der gelösten Stellung in den Bohrungen verbleiben. Wird nun der Werkzeugdorn 3 montiert, so wirkt der vordere Rand 15 des Werkzeugdornes auf den Kugelkäfig 26, der gegen eine Feder axial derart versetzbar ist, daß der Kugelkäfig die Kugeln 11 nicht mehr blockiert und die Kugeln 11 in die Ringnut 16 des Werkzeugdornes 3 eingreifen können.

In einer bevorzugten Variante der Erfindung ist vorgesehen, daß die Spannstange 7 an ihrem vorderen Ende einen Konus 8 trägt und der Konus 8 mit einer Bewegung der Spannstange 7 derart auf die Kugeln 11 wirkt, daß diese zum Festspannen sowohl eine radiale sowie auch eine axiale Kraftkomponente auf das Hobelwerkzeug 2 einprägen. Durch den erfindungsgemäßen Vorschlag wird erreicht, daß gleichzeitig das Hobelwerkzeug fest gespannt ist aber auch keine Unwucht entsteht, da die auftretenden radialen Komponenten für einen exakt konzentrischen Sitz sorgen. Insbesondere sind hierzu die Ringnut 16 entsprechend ausgebildet, um zu erreichen, daß sie sowohl eine axiale sowie auch radiale Kraftkomponente beim Festspannen, das heißt, beim Zurückziehen der Spannstange 7 ergeben.

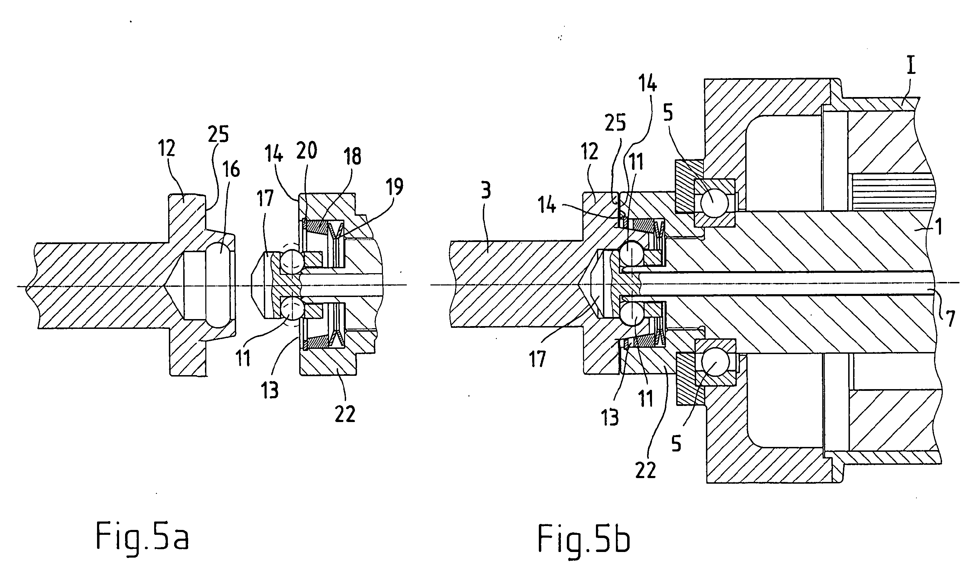

Die Figuren 5a und 5b zeigen eine weitere Ausführungsform einer lösbaren Verbindung zwischen Welle 1 und Werkzeugdorn 3. Die Spannstange 7 ist dabei an ihrer zum Werkzeugdorn 3 weisenden Seite flach ausgebildet. Die Erweiterung der Spannstange 7 in Richtung des Werkzeugdornes hat dann eine kegelstumpfartige Abflachung 17. Die Ringnut 16 in dem Flansch 12 sind in dieser Ausführungsform mit einem Radius versehen, in welchem in der später verbundenen, in der Fig. 5b dargestellten Variante, die Kugeln 11 hineingedrückt werden. Der Flansch 12 wird zum Verbinden mit der Welle 1 des Spindelmotors I in die Aufnahme 13 eingeführt. In dieser Aufnahme 13 befindet sich ein Zentrierring 18, welcher federgelagert durch eine Feder 19 ist. Anschlußseitig ist dabei zum Fixieren des Zentrierringes 18 ein Haltering 20 vorgesehen. Dieser verhindert, daß der Zentrierring 18, bedingt durch die Kraft der Feder 19, aus der Aufnahme 13 gedrückt wird. Der Flansch 12 ist an seiner zur Welle 1 weisenden Seite konisch ausgebildet, so daß im Zusammenwirken des Flansches 12 bzw. des Konus mit dem Zentrierring 18 ein leichtes und genaues Zentrieren des Werkzeugdornes 3 an der Welle 1 ermöglicht ist. Nachdem der Flansch in die Aufnahme 13 eingeführt ist, wird die Spannstange 7 gespannt und in gleicher Weise wie zuvor bei der Ausführungsform der Figuren 4a und 4b beschrieben, werden die Kugeln 11 in die Ringnut 16 des Flansches 12 gedrückt. Damit ist eine ebenfalls sehr genaue Verbindung erhalten. Die genaue Ausrichtung des Werkzeugdornes 3 auf der Welle 1 erfolgt dabei mittels des Zentrierringes 18.

Des Weiteren sind Planflächen 14, 25 vorgesehen. Aus der Fig. 5a ist dabei ersichtlich, daß die Planflächen 25 an dem Flansch 12 sich befinden und die Planflächen 14 sind an der Welle 1 beziehungsweise am Spannring 22 angeordnet. In der Ausführungsform nach der Fig. 5b ist die Spannfläche 14 am Spannring 22 ausgebildet. Wenn jedoch ein Spannring nicht vorgesehen ist, ist es in gleicher Weise möglich, die Planfläche 14 an der Welle 1 direkt vorzusehen. Die Planflächen liegen in der kontaktierten Stellung, wie aus Fig. 5 b ersichtlich, direkt aufeinander an und sorgen für eine exakte Ausrichtung des Flansches 12 und damit des Werkzeugdornes beziehungsweise des Werkzeuges selbst.

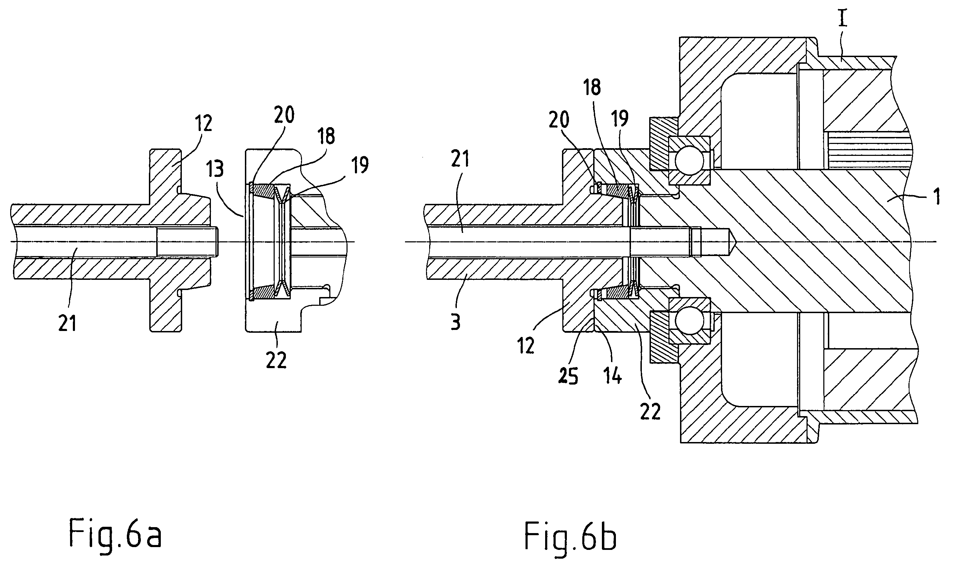

Die Figuren 6a und 6b zeigen eine weitere Ausführungsform einer lösbaren Verbindung zwischen der Welle 1 und dem Werkzeugdorn 3. Mit dem Bezugszeichen 12 ist hierbei wiederum der Flansch des Werkzeugdornes 3 bezeichnet, welcher zur Welle hin konisch abgeflacht ist. In den Aufnahmen 13 der Welle 1 befindet sich ein ebenfalls konisch abgeflachter Zentrierring 18, welcher federgelagert an der Feder 19 anliegt. Durch den Haltering 20 wird verhindert, daß der Zentrierring 18 aus der Aufnahme 13 gedrückt wird. Der Konus wird in gleicher Weise, wie zuvor bei den anderen lösbaren Ausführungsformen der Erfindung beschrieben, in die Aufnahme 13 eingeführt. Der Konus des Flansches 12 wird dabei mittels des Zentrierringes 18 zentriert. Die Spannung erfolgt hierbei durch eine Spannschraube 21, welche in dieser Ausführungsform von der Seite des Werkzeugdornes 3 aus eingeführt wird und in der Welle 1 in ein dort vorhandenes Gewinde dann den Werkzeugdorn auf der Welle spannt. Zur plangenauen Ausrichtung des Werkzeugdornes 3 auf der Welle 1 sind Planflächen 14 und 25 vorgesehen, an welchen der Werkzeugdorn 3 genau an der Welle 1 anliegt. Die Feder 19 wird, wie aus der Fig. 6b ersichtlich, durch das Spannen leicht zusammengedrückt. Beim Lösen der Verbindung zwischen Welle 1 und Werkzeugdorn 3 wird durch die Spannkraft der Feder 19 der Zentrierring 18 in Richtung auf den Haltering 20 gedrückt. Der Konus des Flansches 12, im Zusammenwirken mit dem Zentrierring 18, bewirkt eine exakte und einfache Einführung des Werkzeugdornes 3 in die Aufnahme 13 der Welle 1. Die Spannschraube 21 fixiert dabei die Verbindung, um im Bearbeitungszeitraum dann eine sichere und genaue Verbindung zu gewährleisten.

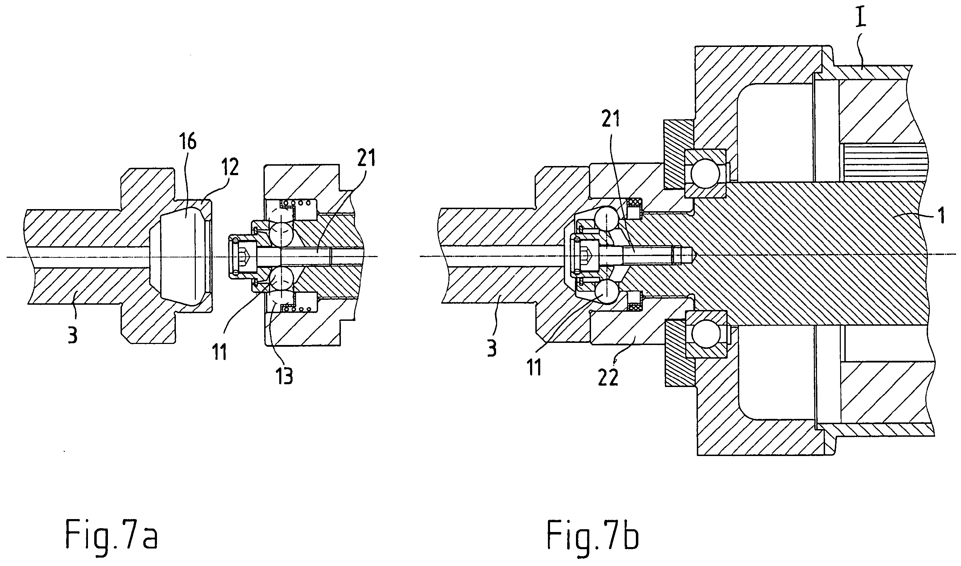

Die Figuren 7a und 7b zeigen eine weitere Ausführungsform einer lösbaren Verbindung zwischen Welle 1 und Werkzeugdorn 3. Auf der Welle 1 ist dabei anschlußseitig in Richtung zum Werkzeugdorn 3 ein Spannring 22 aufgesetzt, der im Inneren die Aufnahme 13 aufnimmt und in der Aufnahme 13 eine Spannschraube 21 angeordnet ist, die an ihrer zum Werkzeugdorn weisenden Seite einen Kopf aufweist, der kegelförmig in Richtung der Kugeln 11 abgeflacht ist. Beim Verbinden von Werkzeugdorn 3 mit der Welle 1 wird der Flansch 12 in den Spannring 22 bzw. in dessen Aufnahme 13 eingeführt, danach erfolgt die Spannung der Spannschraube 21, wodurch die Kugeln 11 in Richtung der Ringnut 16 gedrückt werden. Die Fixierung der Spannschraube 21 erfolgt dabei durch den Werkzeugdorn 3 hindurch. In gleicher Weise ist das Prinzip selbstverständlich auch in entgegengesetzter Anordnung durchführbar, nämlich derart, daß sich der Flansch 12 beispielsweise an der Welle 1 befindet und die Aufnahme 13 mit Kugeln 11 und Spannschraube 21 dann in dem Werkzeugdorn angeordnet sind.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Hobelmaschine, insbesondere Vierseitenhobelmaschine, mit mindestens einem Hobelwerkzeug für das Bearbeiten von Werkstücken, wobei das Hobelwerkzeug von einem Antrieb angetrieben ist, **dadurch gekennzeichnet, daß** der Antrieb durch einen Spindelmotor (I) angegeben ist, der als Direktantrieb für das Hobelwerkzeug (2) ausgebildet ist.

2. Hobelmaschine nach Anspruch 1, **dadurch gekennzeichnet, daß** das Hobelwerkzeug (2) direkt auf der Welle (1) des Spindelmotors (I) angeordnet ist.

3. Hobelmaschine nach einem oder beiden der vorhergehenden Ansprüche, **dadurch gekennzeichnet, daß** zwischen der Motorwelle des Spindelmotors und der das Hobelwerkzeug tragenden Welle (1) kein Getriebe vorgesehen ist.

4. Hobelmaschine nach einem oder mehreren der vorhergehenden Ansprüche, **dadurch gekennzeichnet, daß** wenigstens eine Achse des Spindelmotors (I) höhenverstellbar, seitenverstellbar und/oder winklig verstellbar schwenkbar ausgebildet an der Hobelmaschine angeordnet ist.

5. Hobelmaschine nach einem oder mehreren der vorhergehenden Ansprüche, **dadurch gekennzeichnet, daß** das Werkstück zur Bearbeitung eine Relativbewegung gegenüber dem Hobelwerkzeug durchführt und/oder für die Relativbewegung des Werkstückes (III) eine Vorschubeinrichtung vorgesehen ist.

6. Hobelmaschine nach einem oder mehreren der vorhergehenden Ansprüche, **dadurch gekennzeichnet, daß** ein Auflagetisch (V) vorgesehen ist, auf dem das Werkstück (III) aufliegt und/oder Gleitschienen für die Auflage des Werkstückes (III) vorgesehen sind und die Vorschubeinrichtung das Werkstück (III) spannt und fördert und/oder die Vorschubeinrichtung durch eine antreibbare Rollenbahn bzw. ein Gurt-, Riemen- oder Förderband angegeben ist, auf der das Werkstück (III) aufliegt und/oder auf die das Werkstück (III) gedrückt wird.

7. Hobelmaschine nach einem oder mehreren der vorhergehenden Ansprüche, **dadurch gekennzeichnet, daß** der Auflagetisch (V), die Rollenbahn beziehungsweise die Gleitschienen höhenverstellbar ausgebildet sind und/oder wenigsten eine Verstelleinrichtung zur Einstellung des Winkels des Auflagetisches (V), der Rollenbahn oder der Gleitschienen vorgesehen ist und/oder mehrere, vorzugsweise in unterschiedlichen Winkelstellungen zum Werkstück (III) anordenbare Spindelmotoren (I) vorgesehen sind, an welchen das Werkstück (III) zur Bearbeitung vorbeitransportiert wird.

8. Hobelmaschine nach einem oder mehreren der vorhergehenden Ansprüche, **dadurch gekennzeichnet, daß** die Hobelmaschine als Durchläufer bzw. als sogenannte Durchlaufmaschine ausgebildet ist.

9. Hobelmaschine nach einem oder mehreren der vorhergehenden Ansprüche, **dadurch gekennzeichnet, daß** das Hobelwerkzeug (2) auf einen fest mit der Welle (1) verbundenen Werkzeugdorn (3) aufgesetzt ist und/oder der Werkzeugdorn (3) für das Hobelwerkzeug (2) direkt an die Welle (1) des Spindelmotors (I) lösbar fest, insbesondere wechselbar angeschlossen bzw. angeflanscht ist und/oder eine Spannmutter (4) vorgesehen ist, die das Hobelwerkzeug (2) auf dem Werkzeugdorn (3) spannt und/oder zentriert und/oder das Hobelwerkzeug (2) mit einem integrierten, vorzugsweise wechselbaren Werkzeugdorn (3) versehen ist.

10. Hobelmaschine nach einem oder mehreren der vorhergehenden Ansprüche, **dadurch gekennzeichnet, daß** wenigstens eine Schnittstelle an der Welle (1) des Spindelmotors (I) und am Werkzeugdorn (3) vorgesehen ist, mittels derer der Anschluss des Werkzeugdorns (3) an die Welle (1) des Spindelmotors (I) erfolgt.

11. Hobelmaschine nach einem oder mehreren der vorhergehenden Ansprüche, **dadurch gekennzeichnet, daß** die Schnittstelle an der Welle (1) des Spindelmotors (I) zum Anschluß eines Getriebes dient, welches neben der Schnittstelle zum Anschluß des Getriebes eine weitere Schnittstelle zum Anschluß des Werkzeugdornes (3) beziehungsweise des das Werkzeug tragenden Wellenstumpfes aufweist.

12. Hobelmaschine nach einem oder mehreren der vorhergehenden Ansprüche, **dadurch gekennzeichnet, daß** als Schnittstelle ein Spannkonus vorgesehen ist und/oder als Schnittstelle ein Flansch (12) mit dazu korrespondierender Aufnahme (13) vorgesehen ist und/oder als Schnittstelle eine Bohrung in der Welle (1) mit integrierten Feststellelementen dient, in die ein mit den Feststellelementen zusammenwirkender Zapfen eingreift und/oder der Zapfen an einem das Werkzeug tragenden Wellenstumpf bzw. am Werkzeug selbst angeordnet ist.

13. Hobelmaschine nach einem oder mehreren der vorhergehenden Ansprüche, **dadurch gekennzeichnet, daß** am Werkzeugdorn (3) ein Flansch (12) und an der Welle (1) des Spindelmotors (I) oder des Getriebes dazu korrespondierende Aufnahmen (13) vorgesehen sind, in die der Flansch (12) auf- bzw. einsetzbar ist und im Falle des Anschlusses des Werkzeugdorns (3) an die Welle (1) in den Aufnahmen (13) befindliche Kugeln (11) mittels einer Spannstange (7) in einen Ringkanal beziehungsweise eine Ringnut (16) des Flansches (12) gedrückt werden, wodurch der Flansch (12) gespreizt und damit der Werkzeugdorn (3) fixiert wird.

14. Hobelmaschine nach einem oder mehreren der vorhergehenden Ansprüche, **dadurch gekennzeichnet, daß** Planflächen (14, 25) an Werkzeugdorn (3) und Welle (1) beziehungsweise Spannring (22) vorgesehen sind, mittels derer die korrekte axiale Lage des Werkzeugdorns (3) und /oder des Hobelwerkzeugs (2) eingestellt wird.

15. Hobelmaschine nach einem oder mehreren der vorhergehenden Ansprüche, **dadurch gekennzeichnet, daß** an der Welle (1) ein federgelagerter Kugelkäfig (26) vorgesehen ist und/oder der Kugelkäfig (26) axial beweglich und gegen die Kraft einer Feder durch den vorderen Rand (15) des Werkzeugdornes zurückbewegbar ist, um der Kugel (11) ein Eintauchen in den Ringkanal beziehungsweise die Ringnut (16) zu erlauben.

16. Hobelmaschine nach einem oder mehreren der vorhergehenden Ansprüche, **dadurch gekennzeichnet, daß** eine Spannstange (7) vorgesehen ist, die an ihrem vorderen Ende einen Konus (8) trägt und der Konus (8) bei einer Bewegung der Spannstange (7) derart auf die Kugeln (11) wirkt, daß diese zum Festspannen sowohl eine radiale sowie eine axiale Kraftkomponente auf das Hobelwerkzeug (2) einprägen und/oder die Spannstange (7) in der Welle (1) des Spindelmotors (I) angeordnet ist und/oder die Spannstange (7) in dem Werkzeugdorn (3) angeordnet ist und/oder die Spannstange (7) auf der zu den Kugeln (11) weisenden Seite konisch, insbesondere mit zuerst steil und dann flacher verlaufendem Konuswinkel ausgebildet ist und/oder die Spannstange (7) auf der zu den Kugeln (11) weisenden Seite flach und auf der dazu gegenüberliegenden Seite kegelförmig, vorzugsweise kegelstumpfförmig ausgebildet ist.

17. Hobelmaschine nach einem oder mehreren der vorhergehenden Ansprüche, **dadurch gekennzeichnet, daß** der Flansch (12) an der Welle (1) und die Aufnahme (13) an dem Werkzeugdorn (3) angeordnet ist und/oder der Werkzeugdorn (3) mittels mindestens einer Zentriereinrichtung auf der Welle (1) des Spindelmotors ausgerichtet, insbesondere zentrisch genau ausgerichtet wird und/oder als Zentriereinrichtung ein an dem Werkzeugdorn (3) vorgesehener Flansch (12) dient, der in eine Ausnehmung (13) an der Welle (1) eingreift und/oder wenigstens ein Zentrierring (18) vorgesehen ist, der zylindrisch und/oder konisch ausgebildet ist und/oder der Zentrierring (18) an der Außenseite zylindrisch und an der Innenseite konisch ausgebildet ist und/oder der Zentrierring (18) federgelagert ist.

18. Hobelmaschine nach einem oder mehreren der vorhergehenden Ansprüche, **dadurch gekennzeichnet, daß** der Flansch (12) am Werkzeugdorn (3) konisch ausgebildet ist, in der Aufnahme (13) der Welle (1) ein mit gleichem Konuswinkel versehener, federgelagerter Zentrierring (18) vorgesehen ist, der von einem anschlussseitig angeordnetem Haltering (20) gehalten ist.

19. Hobelmaschine nach einem oder mehreren der vorhergehenden Ansprüche, **dadurch gekennzeichnet, daß** eine Spannschraube (21) vorgesehen ist, die den Werkzeugdorn (3) mit der Welle (1) lösbar verbindet und/oder an der Welle (1) wenigstens ein Spannring (22) zum Spannen des Werkzeugdorns (3) vorgesehen ist und/oder Anlageflächen (6) an Werkzeugdorn (3) und Hobelwerkzeug (2) vorgesehen sind, die das Hobelwerkzeug (2) auf dem Werkzeugdorn (3) axial ausrichten.
